# EUROPEAN PATENT APPLICATION

(11) **EP 3 581 345 A1**
(43) Date of publication of application: **18.12.2019**
(21) Application number: 19178933.8
(22) Date of filing: 07.06.2019
(51) Int. Cl.: B25J 15/00, B25J 18/02, B25J 9/04

(54) **MANIPULATOR**

(30) Priority: 11.06.2018 IT 201800006181
(71) Applicant: S.G.M. Tools S.r.l., 25125 Bresica (IT)
(72) Inventor: SCALVINI, Mosè Giacomo, 25080 Manerba del Garda, BRESCIA (IT)
(74) Representative: Chimini, Francesco

(57) **Abstract**

Handling device (1) for a tool comprising a device body (20); at least one support arm (10), connected in a slidable manner with respect to the device body (20) along a direction of movement (X) and in a rotatable manner around an axis of rotation (R) parallel to or coinciding with said direction (X); at least one manipulation unit (30), associated with the support arm (10) so as to be movable in translation and rotation by said arm (10); and motor means (40).

The manipulation unit (30) comprises at least a pair of gripping units (2, 4) angularly spaced with respect to the axis of rotation (R) so that said groups may be displaced angularly. Furthermore, the motor means (40) are of the rotary type, associated with the device body (20) and connected to the support arm (10) by transmission means (6) of said device (1), and are configured to transform a rotary motion of said means (40) into rotations and translations of said arm (10).

## Description

The present invention concerns a handling device for at least one tool.

In the machine tool sector, it is well known that devices are used for handling machining tools, which provide for picking up tools from magazines and replacing them at the stations where they are to be used.

In some known embodiments, these devices comprise a machine frame and an arm that is movable with respect to the frame, so as to be translatable with respect to the latter, and so as to be further rotatable around an axis parallel to the axis of translation.

In this way, in the known devices, a gripper fixed to the movable arm is put in the condition to complete the necessary movements for picking up and handling a plurality of different tools.

One of the main drawbacks of some known solutions is the difficulty of precisely controlling the movement in translation and rotation, as traditional actuators used for this purpose do not allow these movements to be stopped in intermediate positions with respect to end-of-stroke positions.

The present invention pertains therefore to the foregoing context, having the object of proposing an improved device, wherein the actuation of the arm has been specifically designed to meet the needs of the sector in terms of spatial control of the gripping units, and the desired arrangement thereof.

This object is achieved by a device according to claim 1. The claims dependent thereon show preferred variant embodiments.

The subject of the present invention will now be described in detail, with the aid of the accompanying figures, wherein:

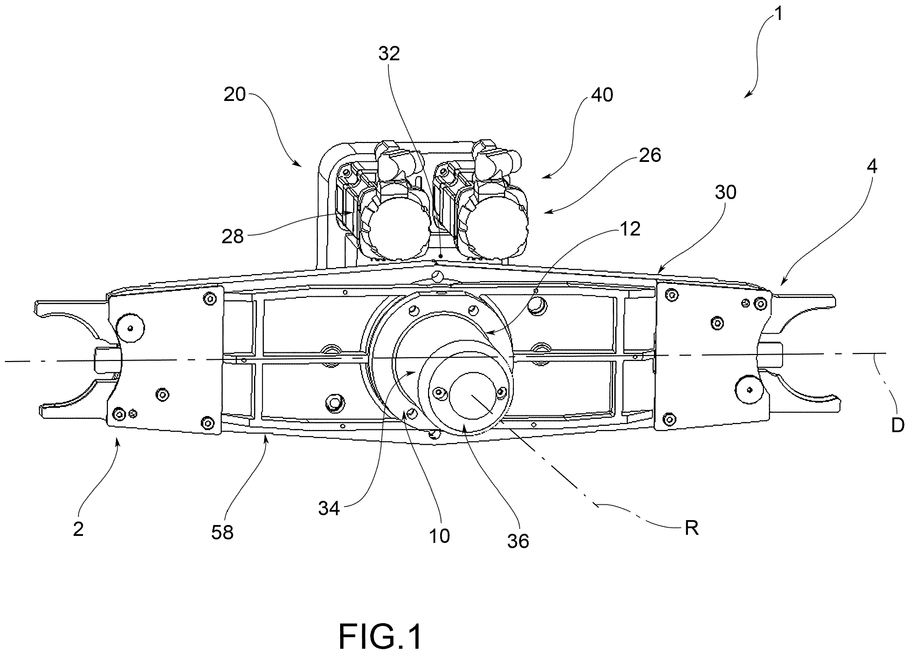

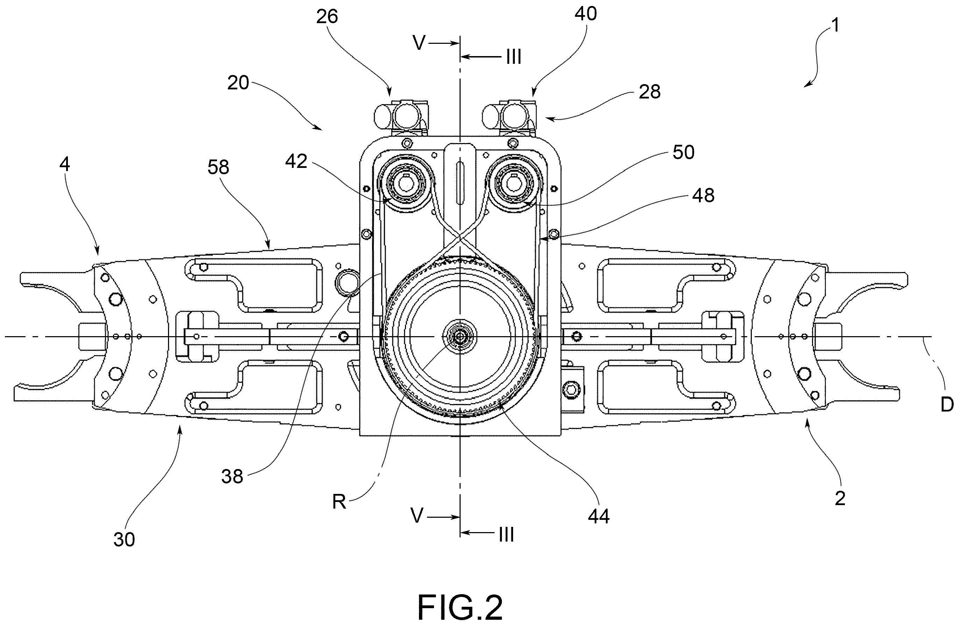

- Figures 1 and 2 represent respectively a front and a rear perspective view of a device of the present invention, according to a possible embodiment;
- Figures 3, 4 show two longitudinal cross-sections of the device in Figure 1 along the plane III-III of this figure, according to a possible variant, wherein the support arm is arranged in two different operating configurations;
- Figure 5 illustrates an additional cross-section of the device in Figure 1 along the cross-sectional plane V-V, so as to make visible the transmission means delegated to the rotation of the support arm;
- Figure 6 shows a further cross-section at the support arm, wherein are shown the rolling means which, according to one embodiment, facilitate the telescopic movement of the arm.
*

With reference to the aforesaid figures, a handling device for a tool is indicated collectively at reference number 1.

In particular, the device 1 of the present invention is designed to move tools to and from a plurality of stations of use, for example for the removal and/or placement of such tools on the spindle of a machine tool and/or in a tool-holder magazine.

The handling device 1 comprises a device body 20, at least one support arm 10, at least one manipulation unit 30 and rotary motor means 40.

According to one embodiment, the support arm 10 is applied cantilevered from the device body 20, particularly from a front surface 32 thereof.

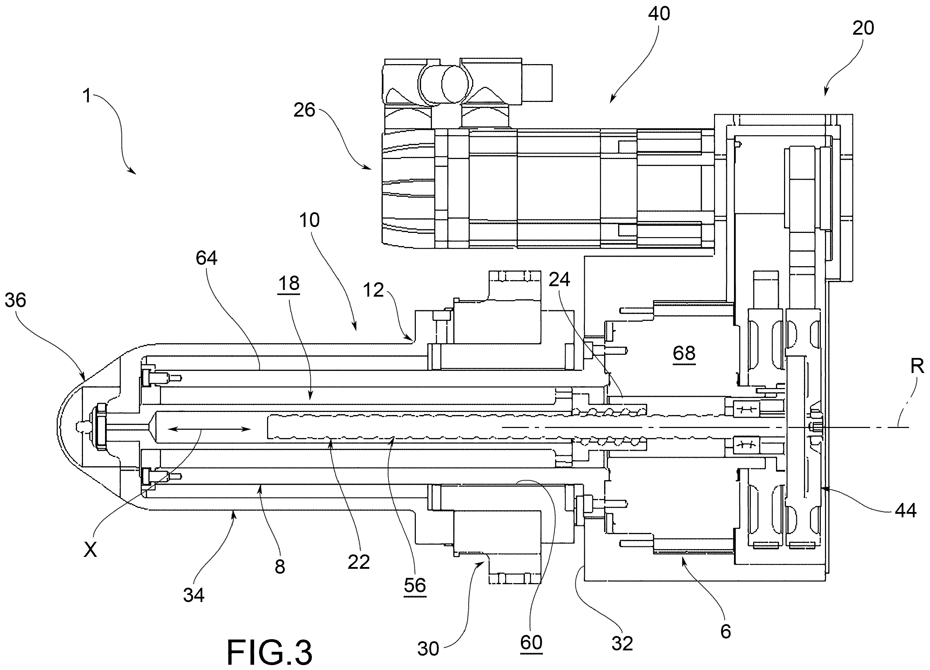

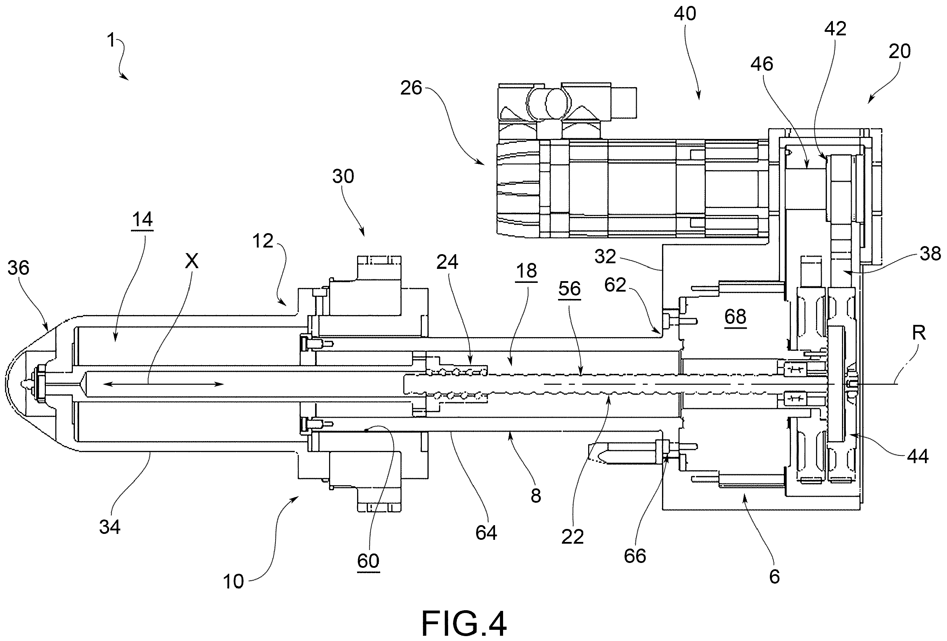

The support arm 10 is connected in a translatable manner with respect to the device body 20 along a direction (or axis) of movement X (for example schematized in Figure 3 or in Figure 4) and in a rotatable manner around an axis of rotation R, parallel to or coinciding with this direction X.

According to one embodiment, the support arm 10 is telescopic.

According to one embodiment, the translation motion of the support arm 10 occurs between a telescopically extended configuration (for example, see figure 4) and a telescopically retracted configuration (figure 3), and vice versa.

According to one embodiment, the rotating motion of the support arm 10 has a limited stroke at a predefined maximum angle, for example substantially 180°, but is movable in both directions of rotation.

According to one embodiment, the support arm 10 comprises an inner guide body 8, which is engaged in a slidable manner by the manipulation unit 30, and an outer body 12, which is mounted coaxially externally (with reference to the direction of movement X) with respect to the inner guide body 8 so as to accommodate the latter at least in part, the outer body 12 being integral in translation with the manipulation unit 30.

According to one embodiment, the inner guide body 8 is associated, in a manner immovable in translation, with the device body 20.

According to one embodiment (see for example figure 3), the inner guide body 8 comprises a body flange 62 (for example annular in shape), which develops radially externally with respect to a tubular portion 64 of this body 8, and which could optionally be penetrated by fastening elements 66 (for example studs) accommodated at least in part in the device body 20. According to one embodiment, the inner guide body 8 is substantially tubular at least with regard to one guide portion 64.

According to one embodiment, the outer body 12 comprises a tubular portion 34, optionally closed distally at least in part (for example, completely).

It should be noted that, in this description, the term "proximal" means any portion or component arranged or directed towards the device body 20. Conversely, the term "distal" means the opposite portions or components, placed towards the closing element along the direction of movement X.

Similarly, the expressions "radial", "axial", "diametrical" shall always refer to the direction of movement X (or to the axis of rotation R which is advantageously coinciding with such direction X), unless otherwise specified.

According to one embodiment, a closing element 36 of the outer body 12 could be connected to the tubular portion 34, so as to superimpose at least in part (for example, completely) a distal access opening of an outer body compartment 14 circumscribed by such body 12.

According to one embodiment, the outer body 12 longitudinally delimits the outer body compartment 14.

According to one embodiment, the inner guide body 8 is mainly or substantially accommodated in the outer body compartment 14, more precisely in the telescopically retracted configuration of the support arm 10.

According to one embodiment, the inner guide body 8 protrudes predominantly externally from the outer body compartment 14, specifically in the telescopically extended configuration of such arm 10.

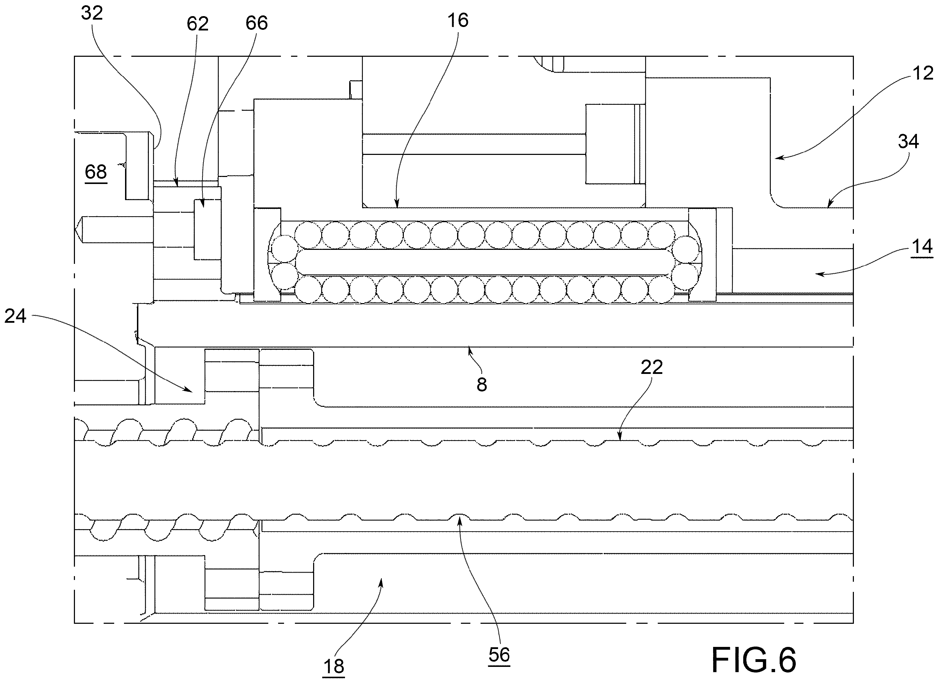

According to one embodiment, the outer body 12 is mounted slidably on the inner guide body 8 by rolling means 16, such means comprising at least one ball guide (e.g. see figure 6) or one or more bearings (variant not shown).

The manipulation unit 30 is associated with the support arm 10 so as to be movable in translation and rotation through this arm 10.

According to one embodiment, the manipulation unit 30 comprises at least one pair of gripping units 2, 4 spaced at an angle with respect to the axis of rotation R, so that these units may be displaced angularly, for example their positions exchanged by means of the aforementioned rotation.

According to one embodiment, the gripping units 2, 4 are in even numbers, for example two or four.

According to one embodiment, the gripping units 2, 4 are diametrically D opposed with respect to the axis of rotation R.

According to one embodiment, the gripping units 2, 4 are attached to a support element 58, common to both. For example, this support element 58 could serve as a spacer.

According to one embodiment, the support element 58 delimits an optionally through connection-arm seat 60, wherein is inserted at least one part of the support arm 10 (for example, the inner guide body 8).

The motor means 40 are associated with the device body 20 and are connected to the support arm 10 by transmission means 6 of the handling device 1, configured to transform a rotary motion of the motor means 40 into rotations and translations of the arm 10.

According to one embodiment, the transmission means 6 comprise a plurality of transmission stages.

It should be noted that, within this description, the expression "transmission stages" shall mean the kinematic system configured to transfer the movements (of translation and rotation) from the motor means 40 to the support arm 10, each stage attainable, for example, through belts, chains, pulleys, gears, sprockets or similar, or combinations thereof.

According to one embodiment, the transmission stages (both in rotation and in translation) nearest to the support arm 10 are mounted in a coaxial manner with respect to the direction of movement X.

As an example, at least one transmission stage nearer to the support arm 10 could comprise a translation pulley 44 and a rotation pulley 52. According to this variant, these pulleys could, for example, be mounted coaxially.

As a further example, at least one transmission stage nearer to the support arm 10 could comprise a reducer body of the reduction means 68 and a helical stem 22 (in this regard, see below). According to this variant, this body and this stem 22 could, for example, be mounted coaxially.

According to one embodiment, the motor means 40 comprise a first motor group 26, delegated to the translation, and an independent, second motor unit 28, delegated to the rotation of the support arm 10.

The term "delegate" shall mean a function reserved to each motor unit 26, 28, each of these being controllable (for example, through control means of the device, not shown) to perform such a function.

According to one embodiment, the first 26 and/or the second 28 motor units are of a hydraulic or pneumatic type.

According to one embodiment, the first 26 and/or the second 28 motor units are of an electrical type, for example, powered with direct current.

According to one embodiment, the first 26 and/or the second 28 motor units are of the brushless type.

According to one embodiment, the first 26 and/or the second 28 motor units are of the synchronous brushless type.

According to one embodiment, the motor means 40 may be controlled by the control means of the handling device 1, so that the manipulation unit 30 may be moved between (opposite) end-of-stroke positions, in translation and/or in rotation.

According to one embodiment, the motor means 40 may be controlled by the control means in such a way that the manipulation unit 30 may be stopped in at least one desired axial and/or radial position, in particular intermediate between the aforementioned end-of-stroke positions. For example, the manipulation unit could be stopped in a series of discrete axial and/or radial positions.

According to one embodiment, the transmission means 6 are at least partially accommodated in the support arm 10, more precisely in the inner guide body 8 of the support arm 10.

According to one embodiment, the transmission means 6 comprise a helical stem 22, which develops at least in part in an inner body compartment 18 of the inner guide body 8 and which is adapted to be rotated by the motor means 40.

According to one embodiment, the transmission means 6 further comprise a sliding bushing 24, which is mounted slidably along the helical stem 22 and fixed to an outer body 12 of the support arm 10 to promote the translation thereof.

According to one embodiment, the sliding bushing 24 is of the ball screw type.

According to one embodiment, the helical stem 22 delimits a cylindrical helix.

According to one embodiment, the helical stem 22 externally delimits a helical track 56 (for example in the form of a recess) that develops at a constant pitch along the direction of movement X.

According to one embodiment, the handling device 1 comprises means 68 for reducing the number of revolutions that may be made by at least one shaft 46, 54 of the motor means 40 in order to reduce the number of revolutions of this shaft 46, 54.

According to one embodiment, the translation of the support arm 10 is carried out mechanically by means of a belt or chain transmission, or by means of a gear transmission, optionally by reduction means, or by combinations thereof.

According to one embodiment, the translation of the support arm 10 is carried out by means of a plurality of transmission stages comprising a first belt (or chain) element 38 which develops between a pair of translation pulleys 42, 44 (or translation sprockets), a first translation pulley/sprocket 42 being mounted in a manner rotationally integral to a first shaft 46 of the first motor unit 26 (for example, see figure 4), a second translation pulley/sprocket 44 being mounted in a manner rotationally integral to the helicoidal stem 22 which, according to an advantageous variant, constitutes the last transmission stage in translation (or transmission stage nearest to the support arm; as defined previously).

According to one embodiment, a functional group comprising the sliding bushing 24, the inner guide body 8, the outer body 12 and the manipulation unit 30 is integrally rotatable around the axis of rotation R in order to carry out the angular displacement or exchange of positions of the gripping units 2, 4.

According to one embodiment, during the rotation of the functional group defined above, the helical stem 22 is not involved in the rotation - in the same direction - of this group.

According to one embodiment, during the rotation of the functional group defined above, the helical stem 22 is rotated in a direction contrary to the sliding bushing 24, in particular in order to avoid/cancel longitudinal movements of the gripping units 2, 4 during the angular displacement or exchange of positions thereof.

According to one embodiment, the rotation of the support arm 10 is carried out mechanically by means of a belt or chain transmission, or by means of a gear transmission.

According to one embodiment, the body flange 62 is fixed to a reducer body of the reduction means 68, this body 62 being advantageously at least partially accommodated in the device body 20, in particular in a rotatable manner with respect to this body 20.

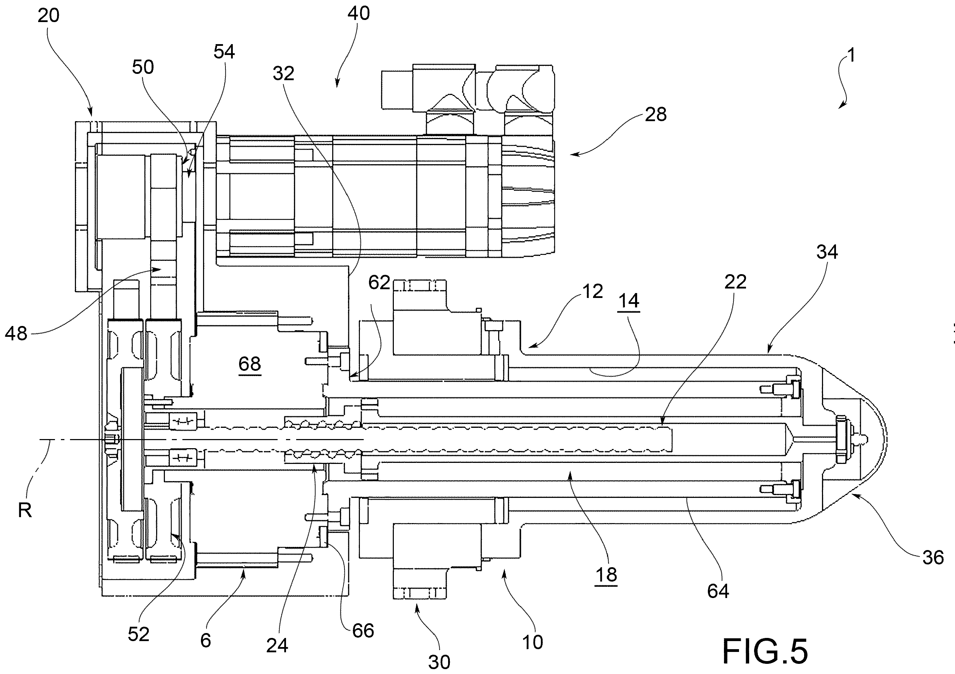

According to one embodiment, the rotation of the support arm 10 is carried out by means of a plurality of transmission stages comprising a second belt (or chain) element 48 which develops between a pair of rotation pulleys 50, 52 (or rotation sprockets), a first rotation pulley/sprocket 50 being mounted in a manner rotationally integral to a second shaft 54 of the second motor unit 28 (for example see figure 5), a second rotation pulley/sprocket 52 being mounted in a manner rotationally integral to the functional group as defined above.

Innovatively, the device of the present invention is able to achieve the predetermined objects, in particular through the use of rotary motor means that allow better control of displacements than traditional systems (the latter being for example of a linear type).

Advantageously, a telescopic support arm allows one to operate in smaller operating spaces (for example to the rear of the device body) compared to some types of traditional devices.

Advantageously, the device of the present invention is extremely compact also in relation to the radial extension of the support arm, possible by virtue of the discussed nesting.

Advantageously, the device of the present invention is extremely compact also in relation to the axial extension, by virtue of the concentricity of the transmission stages discussed above.

Advantageously, the device of the present invention allows for its installation to be carried out in extremely short times, for example when compared to traditional linear-type systems.

Advantageously, the device of the present invention makes it possible to precisely manage the speed of the movements and to control the position of the support arm at all times, so that these may be adapted to different needs, for example according to the weight of the tools or their specific shape.

Advantageously, the device of the present invention allows the manipulation unit to move in a series of desired axial and angular positions, end-of-stroke or intermediate, with a precision dramatically superior to that of the technical solutions currently available.

Advantageously, the movements of the support arm occur in an extremely fluid manner, extending the service life of the device.

Advantageously, the device of the present invention allows the times for changing the tools to be optimized, and their replacement to be managed, both as a function of the work to be carried out and as a function of the reduction of downtime.

Advantageously, the device of the present invention allows the friction between the moving parts to be reduced, so as to extend the service life of the components thereof, and to delay the frequency of routine maintenance.

Advantageously, the device of the present invention allows the traditional hydraulic or pneumatic systems of movement to be foregone, as the movement may be controlled solely in an electric manner.

Advantageously, the absence of working fluids in the present device allows for structural simplifications, and greater safety in operation, to be obtained.

To the embodiments of the aforesaid device, one skilled in the art, in order to meet specific needs, may introduce variants or replacements of elements with others that are functionally equivalent.

Also these variants are contained within the scope of protection as defined by the following claims.

Moreover, each variant described as belonging to a possible embodiment may be implemented independently of the other variants described.

## Claims

1. Handling device (1) for a tool comprising:
- a device body (20);
- at least one support arm (10), connected in a translatable manner with respect to the device body (20) along a direction of movement (X) and in a rotatable manner around an axis of rotation (R) parallel to or coinciding with said direction (X);
- at least one manipulation unit (30), associated with the support arm (10) so as to be movable in translation and rotation by means of said arm (10);
the manipulation unit (30) comprising at least a pair of gripping units (2, 4) angularly spaced with respect to the axis of rotation (R) so that said groups may be displaced angularly;
- rotary motor means (40), associated with the device body (20) and connected to the support arm (10) by transmission means (6) of said device (1), configured to transform a rotary motion of said means (40) into rotations and translations of said arm (10).

2. Device according to the preceding claim, wherein the support arm (10) is telescopic, and wherein said arm (10) comprises an inner guide body (8) - for example substantially tubular - slidably engaged by the manipulation unit (30), and an outer body (12) mounted coaxially externally with respect to the inner guide body (8) so as to accommodate the latter at least partially, and integral in translation with the manipulation unit (30) .

3. Device according to the preceding claim, wherein the outer body (12) delimits an outer body compartment (14) in which the inner guide body (8) is accommodated predominantly or substantially completely in a telescopically retracted configuration (Fig 3).

4. Device according to any one of claims 2-3, wherein the outer body (12) delimits an outer body compartment (14) from which the inner guide body (8) protrudes outwardly predominantly in a telescopically extended configuration (Fig. 4) of said arm (10).

5. Device according to any one of claims 2-4, wherein the outer body (12) is slidably mounted on the inner guide body (8) by rolling means (16) comprising at least one ball guide.

6. Device according to any one of the preceding claims, wherein the transmission means (6) are at least partially accommodated in the support arm (10), in an inner guide body (8) of said arm (10).

7. Device according to the preceding claim, wherein the transmission means (6) comprise a helical stem (22), which develops at least partially in an inner body compartment (18) of the inner guide body (8) and is adapted to be rotated by the motor means (40), and comprise a sliding bushing (24) - for example of the ball screw type - mounted slidably along said helical stem (22) and fixed to an outer body (12) of said arm (10) to promote the translation thereof.

8. Device according to the preceding claim, wherein a functional group comprising the sliding bushing (24), the inner guide body (8), the outer body (12) and the manipulation unit (30) is rotatable integrally around the axis of rotation (R) in order to carry out said angular displacement, or exchange of position, of the gripping units (2, 4).

9. Device according to the preceding claim, wherein, during the rotation of said functional group, the helical stem (22) is rotated in a direction contrary to the sliding bushing (24), in order to avoid/cancel longitudinal movements of the gripping units (2, 4) during the angular displacement or exchange of position thereof.

10. Device according to any one of the preceding claims, wherein the gripping units (2, 4) are diametrically (D) opposite to the axis of rotation (R).

11. Device according to any one of the preceding claims, wherein the motor means (40) comprise a first motor group (26) delegated to said translation and an independent, second motor unit (28) delegated to said rotation of the support arm (10), the first (26) and/or the second (28) motor group being of the hydraulic type, of the pneumatic type, of the electrical type.

12. Device according to any one of the preceding claims, wherein the motor means (40) are controllable through control means of said device (1), so that the manipulation unit (30) may be moved between end-of-stroke positions, in translation and/or in rotation, and is stoppable in at least one desired axial and/or radial position, intermediate between said end-of-stroke positions.

13. Device according to any one of the preceding claims, wherein the transmission means (6) comprise a plurality of transmission stages, wherein the rotation and translation transmission stages nearest to the support arm are mounted coaxially with respect to the direction of movement (X).
